# EUROPÄISCHE PATENTSCHRIFT

(11) **EP 3 429 061 B1**
(45) Veröffentlichungstag und Bekanntmachung des Hinweises auf die Patenterteilung: **26.08.2020**
(21) Anmeldenummer: 18176955.5
(22) Anmeldetag: 11.06.2018
(51) Int. Cl.: H02K 1/27, H02K 15/12

(54) **KLEMMVORRICHTUNG UND ROTOR FÜR EINE ELEKTRISCHE MASCHINE**
CLAMP DEVICE AND ROTOR FOR AN ELECTRIC MACHINE
DISPOSITIF DE SERRAGE ET ROTOR DE MACHINE ELECTRIQUE

(30) Priorität: 12.07.2017 DE 102017211882
(43) Veröffentlichungstag der Anmeldung: 16.01.2019
(73) Patentinhaber: Robert Bosch GmbH, 70442 Stuttgart (DE)
(72) Erfinder: Lange, Fabian, 30175 Hannover (DE); Stahl, Andreas, 31180 Gross Foerste (DE)

(56) Entgegenhaltungen:
- EP-A1- 2 091 131
- EP-A1- 2 249 460
- DE-A1-102012 003 453
- DE-B3-102016 201 281
- JP-A- 2003 235 189
- JP-A- 2011 239 607
- US-A1- 2011 057 529

## Beschreibung

### Stand der Technik

Die vorliegende Erfindung betrifft eine Klemmvorrichtung für eine elektrische Maschine. Außerdem betrifft die Erfindung einen Rotor für eine elektrische Maschine aufweisend die Klemmvorrichtung.

### Aus dem Stand der Technik

Elektrische Maschinen, wie sie als Traktionsmaschinen für Hybrid- oder Elektrofahrzeuge eingesetzt werden, müssen eine sehr hohe Leistungsdichte sowie eine hohe Lebensdauer aufweisen und sollen aufgrund des Preisdrucks im Automotive-Bereich gleichzeitig kostengünstig herstellbar sein.

Zur Realisierung der hohen Leistungsdichte werden in Traktionsmaschinen häufig Permanentmagnete eingesetzt. Diese können sowohl an der Oberfläche des Rotors angebracht sein als auch als sogenannte "vergrabene" Magnete in den Taschen des Lamellenpakets. Die Taschen werden durch Aussparungen der axial gestapelten Blech-Lamellen des Rotors ausgebildet.

Bei sehr großen Leistungsdichten kann zur Verringerung von elektromagnetischen Verlusten (insbesondere Magnetverluste) ein einzelner Magnet durch mehrere kleinere Magnete ersetzt werden (sogenannte segmentierte Magnete). Dieser Vorteil geht allerdings zu Lasten eines höheren Handlingaufwands, vergrößerter Toleranzketten sowie der Notwendigkeit eines Anordnens der Magnete zueinander.

Die Fixierung der Magnete in den Taschen erfolgt entweder stoffschlüssig mit einem Verbindungsstoff, insbesondere Klebstoff oder Gießharz, oder durch eine kraftschlüssige Verbindung, wie beispielsweise eines Klemmsitzes.

Bei der stoffschlüssigen Anbindung der Permanentmagneten über Klebstoff oder Gießharz stellt sich insbesondere bei Rotoren mit großer axialer Länge das Problem dar, dass nicht der gesamte Gießkanal gefüllt wird, da der Druckverlust über die Länge zu groß wird. Zur Verringerung des Druckabfalls müssten die Gießkanäle vergrößert werden, was sich negativ auf die elektromagnetische Auslegung des Rotors auswirkt. Ein weiterer Nachteil bei der Verwendung von thermisch aushärtendem Klebstoff oder Gießharz ist die Notwendigkeit den Rotor aufheizen und abkühlen zu müssen. Dies führt zu entsprechenden Energiekosten und erhöht die Taktzeit.

Bei der kraftschlüssigen Anbindung der Permanentmagnete über einen Klemmsitz oder ein Verstemmen ergeben sich mechanische Probleme. Beim Klemmsitz ist schwierig sicherzustellen, dass der Anpressdruck gleichmäßig ist. Über die Lebensdauer ist zudem sicherzustellen, dass ein ausreichender Anpressdruck herrscht.

Zudem ist das Elektroblech in der übergeordneten Norm ausschließlich über elektromagnetische Kenngrößen definiert und nicht über mechanische Kenngrößen. Dies führt zu Schwankungen in den mechanischen Eingangsgrößen mit den entsprechenden Schwierigkeiten in der Auslegung. Bei der Anbindung über Verstemmpunkte ergibt sich das Problem, dass der Permanentmagnet lokal einem hohen Druck ausgesetzt ist. Dies kann bei den spröden Permanentmagneten zu Rissen führen. Das Dokument DE 10 2016 201 281 B3 offenbart eine Klemmvorrichtung.

### Offenbarung der Erfindung

Die Erfindung geht aus von einer Klemmvorrichtung nach Gattung des unabhängigen Anspruchs 1. Ferner geht die Erfindung aus von einem Rotor nach Gattung des unabhängigen Anspruchs 8.

Die erfindungsgemäße Klemmvorrichtung weist wenigstens einen magnetischen Körper und eine den magnetischen Körper zumindest teilweise umgebende Umspritzung auf, wobei die Umspritzung Klemmmittel zur Klemmung in Öffnungen eines Rotors der elektrischen Maschine aufweist.

Unter einer Klemmvorrichtung kann eine Vorrichtung verstanden werden, die eingerichtet ist, in eine Öffnung des Rotors eingefügt, eingebracht oder eingesetzt zu werden. Vorzugsweise ist die Klemmvorrichtung als eine Fügevorrichtung ausgebildet.

Unter einer Klemmung kann ein Verklemmen oder Verspreizen verstanden werden. Infolge der Klemmung verbleibt die Klemmvorrichtung in der Öffnung. Mit anderen Worten wird die Klemmvorrichtung in der Öffnung positioniert bzw. fixiert.

Unter einem magnetischen Körper, auch Magnet genannt, kann ein Körper verstanden werden, der bestimmte andere Körper magnetisch anziehen oder abstoßen kann. Dabei weist der magnetische Körper einen magnetischen Nord- und Südpol auf. Vorzugsweise ist der magnetische Körper als Permanentmagnet ausgebildet. Bevorzugt weist der magnetische Körper eine rechteckige, quadratische, dreieckige oder trapezförmige Grundfläche auf. Weiter bevorzugt sind weitere Grundformen als Grundfläche denkbar. Besonders bevorzugt sind die magnetischen Körper quaderförmig ausgebildet.

Unter einer Öffnung kann ein Klemmsitz, eine Tasche oder eine Bohrung im Rotor verstanden werden.

Vorzugsweise wird die den wenigstens einen magnetischen Körper umgebende Umspritzung mittels eines Spritzgusswerkzeugs hergestellt. Dabei weist das Spritzgusswerkzeug eine formgebende Struktur auf, die als "Negativform" zur Umspritzung ausgebildet ist.

Bevorzugt besteht die Umspritzung aus einem elastischen Material. Dieses Material kann ein Kunststoff sein, wie beispielsweise ein thermoplastisches Elastomer (TPE) oder ein Elastomer (insbesondere NBR, EPDM). Bevorzugt weist der Kunststoff Füllstoffe auf, wie beispielsweise Industrieruße oder Silicia.

Bei Verwendung des elastischen Materials weist die Umspritzung eine materialbedingte Nachgiebigkeit auf. Das elastische Material kann unter einer Krafteinwirkung seine Form verändern und bei Wegfall der einwirkenden Kraft wieder in die Ursprungsform zurückzukehren. Hierdurch lässt sich eine Klemmung der Klemmvorrichtung in einer Öffnung des Rotors auf einfache Weise bewerkstelligen.

Durch die Nachgiebigkeit der Umspritzung kann sich auch der wenigstens eine magnetische Körper in der Rotoröffnung automatisch ausrichten. Durch eine asymmetrische geometrische Gestaltung ist auch eine außermittige Ausrichtung des magnetischen Körpers in der Rotoröffnung erzielbar.

Vorzugsweise werden die magnetischen Körper pulvermetallurgisch hergestellt. Hierdurch weisen die magnetischen Körper eine relativ geringe Scherfestigkeit auf. Durch die Umspritzung können die magnetischen Körper sicher vor Beschädigungen geschützt werden. Dies wirkt sich insbesondere positiv auf die Prozesssicherheit bei einem Fügeprozess aus.

Durch das Vorsehen der Umspritzung kann gegenüber einer separat ausgebildeten Klemmvorrichtung die Toleranzkette verkleinert werden. Bei der separat ausgebildeten Klemmvorrichtung würde sie aus Bohrung im Rotor, Klemmvorrichtung und magnetischem Körper bestehen. Beim umspritzten magnetischen Körper nur aus Bohrung im Rotor und Umspritzung. Dies reduziert die geometrischen Streuungen im Fügeprozess und erhöht die Prozesssicherheit.

Ferner sind durch das Vorsehen der Umspritzung geometrische Schwankungen bzw. Unregelmäßigkeiten der magnetischen Körper ausgleichbar.

Eine thermische Anbindung des umspritzten magnetischen Körpers kann zum einen über die geometrische Gestaltung der Umspritzung und zum anderen über Füllstoffe des Kunststoffs beeinflusst werden. Insbesondere kann die thermische Anbindung lokal angepasst werden.

Über eine geometrische Gestaltung der Umspritzung kann auch Einfluss auf die Rotorsteifigkeit genommen werden, indem zum Beispiel die Klemmwirkung der Umspritzung variiert wird.

Über eine Verwendung von unterschiedlichen Farben für die Umspritzung kann bei magnetischen Körpern ähnlicher Größe die Verwechslungsgefahr minimiert werden.

Die Unteransprüche zeigen bevorzugte Weiterbildungen der Erfindung.

Vorteilhaft sind die Klemmmittel an wenigstens zwei Seiten der Klemmvorrichtung angeordnet. Hierdurch ist eine ausreichende Verklemmung bzw. Verspreizung der Klemmvorrichtung in einer Rotoröffnung erreichbar.

Vorzugsweise sind die Klemmmittel stirnseitig an der Klemmvorrichtung angeordnet. Ergänzen oder alternativ können die Klemmmittel mantelseitig an der Klemmvorrichtung angeordnet sein. Hierdurch lässt sich eine Verklemmung bzw. Verspreizung der Klemmvorrichtung in einer Rotoröffnung auf einfache Weise erzielen.

Weiter vorteilhaft sind die Klemmmittel als abwechselnd angeordnete Erhebungen und Vertiefungen in der Umspritzung ausgebildet. Durch das Vorsehen der Erhöhungen und Vertiefungen lässt sich die Klemmvorrichtung in die Öffnung einbringen und darin auf einfache Weise verklemmen bzw. verspreizen. Die Klemmmittel können als in der Umspritzung angeordnete Rillenstrukturen verstanden werden. Bevorzugt sind die Erhebungen und Vertiefungen parallel zueinander angeordnet. Besonders bevorzugt sind die Erhebungen und Vertiefungen orthogonal zu einer Einbringrichtung (=Fügerichtung), die sich beim Einbringen (=Fügen) der Klemmvorrichtung in die Öffnungen des Rotors ergibt, angeordnet.

Weiter vorteilhaft ist ein Abstand zwischen benachbarten Erhebungen gleich groß. Alternativ ist ein Abstand zwischen benachbarten Erhebungen abwechselnd unterschiedlich groß, beispielsweise abwechselnd klein und groß.

Durch geometrische Variationen der Umspritzung kann die Steifigkeit der Umspritzung gezielt beeinflusst werden und damit die Flächenpressung zwischen dem umspritzten magnetischen Körper und der Rotoröffnung. Zudem müssen auch nicht alle Seiten des magnetischen Körpers umspritzt werden, um möglichst viel Magnetmaterial in eine räumlich definierte Rotoröffnung einzubringen.

Weiter vorteilhaft verläuft wenigstens eine weitere Vertiefung im Wesentlichen orthogonal durch die Erhebungen und Vertiefungen. Hierdurch lässt sich die Klemmvorrichtung einfacher in die Öffnungen einbringen, weil die Erhebungen flexibler werden.

Weiter sind wenigstens zwei magnetische Körper miteinander verbunden, wobei die magnetischen Körper nebeneinander angeordnet oder aufeinanderliegend angeordnet sind. Bevorzugt liegen die magnetischen Körper plan an jeweils einer ihrer sich anziehenden Seiten aufeinander bzw. aneinander. Eine Seite kann eine Mantelfläche, eine Grundfläche, eine Deckfläche oder eine Stirnseite sein. Mit anderen Worten können wenigstens zwei magnetische Körper über jeweils wenigstens eine ihrer Seiten miteinander verbunden werden.

Weiter vorteilhaft sind die magnetischen Körper unterschiedlich groß und/oder unterschiedlich geformt. Hierdurch ist es möglich die Klemmvorrichtung geometrisch unterschiedlich hoch, breit und tief auszubilden und an die jeweilige Geometrie der Öffnung anzupassen.

Durch die Kombination verschieden großer magnetischer Körper sowie einer Anpassungen der Umspritzungsgeometrie lassen sich komplexe Geometrien herstellen.

Alternativ weisen die magnetischen Körper dieselbe Größe und Form auf.

Weiter bilden die zwei magnetischen Körper einen stufenförmigen Querschnitt aus. Vorzugsweise füllt die Umspritzung Stufenbereiche zumindest teilweise aus.

Vorzugsweise kann ein einzelner magnetischer Körper durch mehrere magnetische Körper ersetzt werden. Mit anderen Worten erfolgt eine Segmentierung des großen magnetischen Körpers in wenigstens zwei kleinere magnetische Körper. Auf diese Weise ist ein Magnetpaket erzeugbar, das sich aus wenigstens zwei segmentierten magnetischen Körpern zusammensetzt.

Bei der Verwendung von segmentierten magnetischen Körpern ergeben sich zusätzliche Vorteile:
Zum einen kann die Umspritzung mehrere magnetische Körper aufnehmen. Zum anderen besteht bei der Wahl der Anordnung der magnetischen Körper relativ zueinander eine sehr große Gestaltungsfreiheit.

Der erfindungsgemäße Rotor weist eine Klemmvorrichtung auf, wie oben beschrieben. Unter einem Rotor kann der sich drehende bzw. rotierende Teil einer elektrischen Maschine verstanden werden. Das Gegenstück zum Rotor ist der Stator, der feststehender und unbeweglicher Teil der elektrischen Maschine verstanden werden kann. Vorzugsweise weist der Rotor eine Vielzahl von axial gestapelten Blech-Lamellen auf. Mit anderen Worten weist der Rotor ein Blechlamellenpaket auf. Vorzugsweise erfolgt ein Umspritzen der magnetischen Körper mittels der Umspritzung vor einem Einbringen der Klemmvorrichtung in die Öffnungen des Rotors.

### Kurze Beschreibung der Zeichnungen

Nachfolgend werden Ausführungsbeispiele der Erfindung unter Bezugnahme auf die begleitende Zeichnungen im Detail beschrieben. In den Zeichnungen sind:
- Figur 1: eine schematische Ansicht einer ersten exemplarischen Ausführungsform,
- Figur 2: einen schematischen Schnitt durch die Ausführungsform aus Figur 1,
- Figur 3: einen weiteren schematischen Schnitt durch die Ausführungsform aus Figur 1,
- Figur 4: eine weitere schematische Ansicht aus Figur 1,
- Figur 5: eine schematische Ansicht einer weiteren alternativen Ausführungsform zur Figur 1,
- Figur 6: eine weitere schematische Ansicht der Ausführungsform aus Figur 1,
- Figur 7: eine schematische Ansicht einer weiteren alternativen Ausführungsform zur Figur 6,
- Figur 8: eine schematische Ansicht einer weiteren alternativen Ausführungsform zur Figur 6,
- Figur 9: eine schematische Ansicht auf eine Magnetanordnung der Ausführungsform aus Figur 6,
- Figur 10: eine schematische Ansicht einer weiteren alternativen Ausführungsform zur Figur 9,
- Figur 11: eine schematische Ansicht einer weiteren alternativen Ausführungsform zur Figur 9,
- Figur 12: eine schematische Ansicht einer ersten erfindungsgemäßen Ausführungsform,
- Figur 13: eine schematische Ansicht einer alternativen erfindungsgemäßen Ausführungsform zur Figur 12,
- Figur 14: eine schematische Ansicht einer weiteren erfindungsgemäßen Ausführungsform vor dem Einfügen von Klemmvorrichtungen in Rotoröffnungen eines Rotors einer elektrischen Maschine,
- Figur 15: eine schematische Ansicht der Ausführungsform aus Figur 14 während des Einfügens der Klemmvorrichtungen in die Rotoröffnungen und
- Figur 16: eine schematische Ansicht aus Figur 14 nach dem Einfügen der Klemmvorrichtungen in die Rotoröffnungen.

### Ausführungsformen der Erfindung

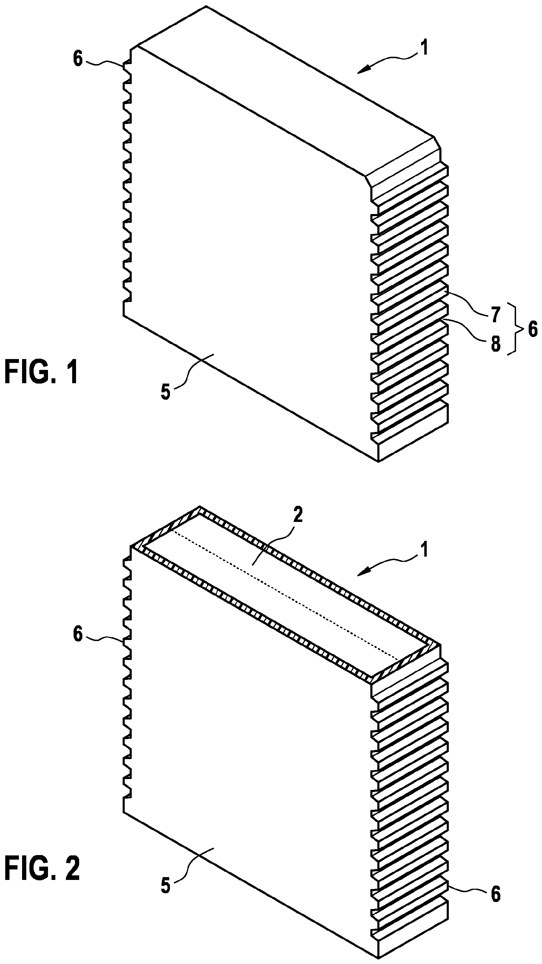

Figur 1 zeigt eine Klemmvorrichtung 1 für eine elektrische Maschine. Die Klemmvorrichtung 1 weist einen magnetischen Körper (nicht gezeigt) und eine den magnetischen Körper vollständig umgebende Umspritzung 5 auf. Die Umspritzung 5 weist stirnseitig angeordnete Klemmmittel 6 auf. Die Klemmmittel 6 sind als abwechselnd angeordnete Erhebungen 7 und Vertiefungen 8 in der Umspritzung 5 ausgebildet. Die Klemmmittel 6 können als in der Umspritzung angeordnete Rillenstrukturen verstanden werden.

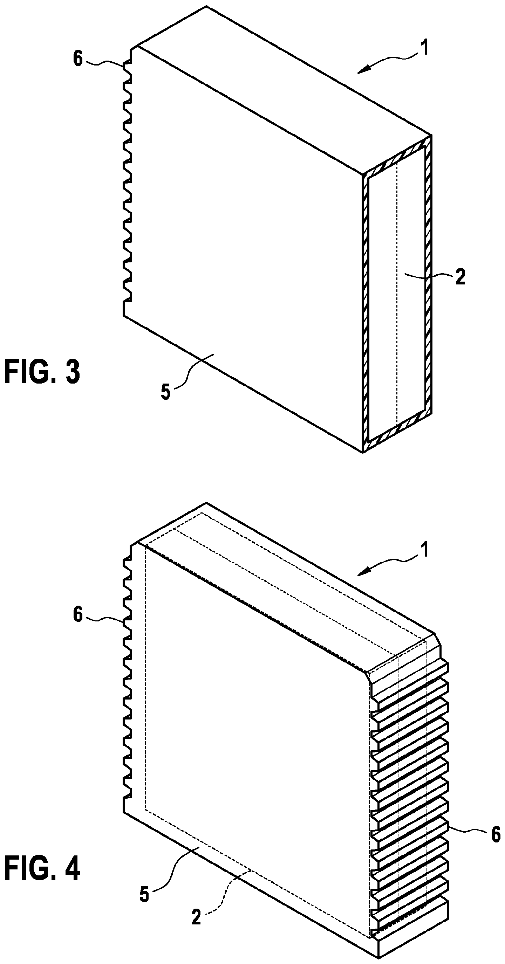

Figur 2 zeigt einen Schnitt durch die Klemmvorrichtung aus Figur 1 mit dem magnetischen Körper 2, der als Permanentmagnet ausgebildet ist. Figur 3 zeigt einen weiteren Schnitt durch die Klemmvorrichtung aus Figur 1 mit dem magnetischen Körper 2.

Figur 4 zeigt eine Darstellung der Anordnung des magnetischen Körpers 2 innerhalb der Klemmvorrichtung 1. Der magnetische Körper 2 ist dabei von der Umspritzung 5 umgeben, wie oben beschrieben. Der magnetische Körper 2 weist einen magnetischen Nord- und Südpol auf. Dabei liegen der magnetische Nordpol und der magnetische Südpol plan aufeinander. Der magnetische Körper 2 ist quaderförmig ausgebildet.

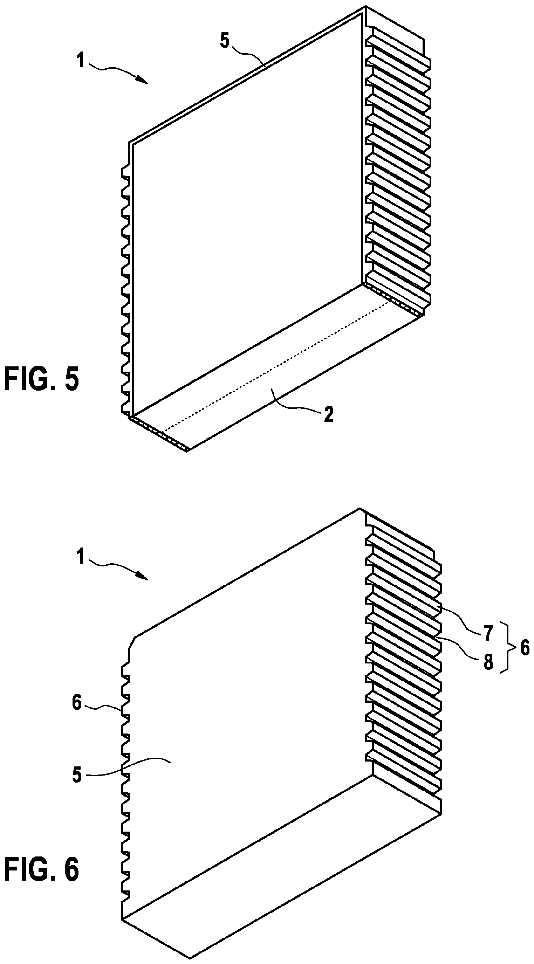

Figur 5 zeigt eine weitere alternative Klemmvorrichtung 1. Die Klemmvorrichtung 1 weist einen als Permanentmagneten ausgebildeten magnetischen Körper 2 und eine den magnetischen Körper 2 teilweise umgebende Umspritzung 5 auf. Die Umspritzung 5 weist stirnseitig angeordnete Klemmmittel 6 auf, wobei an zwei Seiten des magnetischen Körpers 2 keine Umspritzung 5 vorgesehen ist. Die Klemmmittel 6 sind als abwechselnd angeordnete Erhebungen 7 und Vertiefungen 8 in der Umspritzung 5 ausgebildet

Figur 6 zeigt eine weitere Ansicht der Klemmvorrichtung 1 aus Figur 1 in einer anderen Perspektive. Ein Abstand zwischen den benachbarten Erhebungen 7 ist gleich groß. Konsequenterweise ist damit auch ein Abstand zwischen zwei Vertiefungen 8 gleich groß.

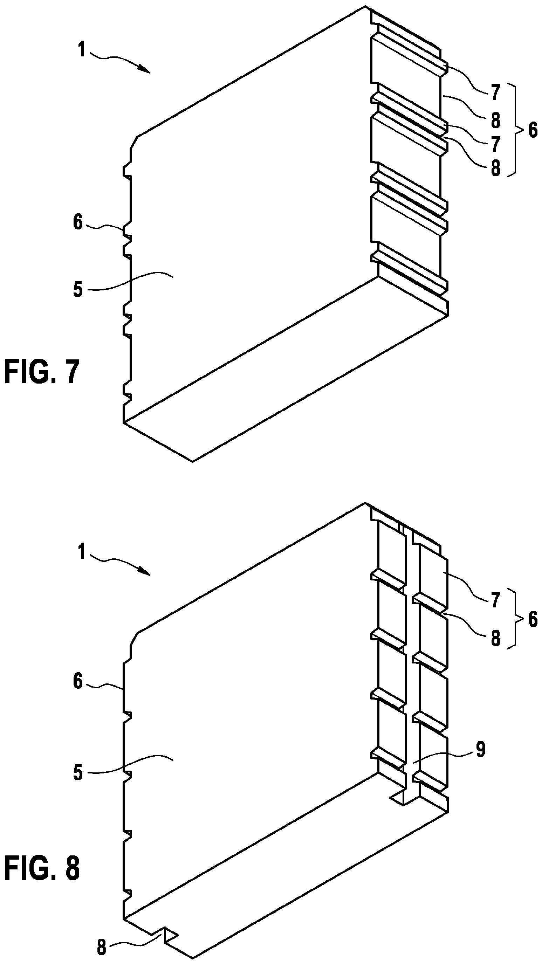

Figur 7 zeigt eine alternative Ausgestaltung der Umspritzung 5. Ein Abstand zwischen zwei benachbarten Erhebungen 7 ist abwechselnd klein und wieder groß. Konsequenterweise ist damit auch ein Abstand zwischen zwei Vertiefungen 8 abwechselnd klein und wieder groß.

Figur 8 zeigt eine weitere eine weitere alternative Ausgestaltung der Umspritzung 5. Ein Abstand zwischen den benachbarten Erhebungen 7 ist gleich groß.

Konsequenterweise ist damit auch ein Abstand zwischen zwei Vertiefungen 8 gleich groß. Im Unterschied zu den Figuren 6 und 7 sind die Erhebungen 7 größer dimensioniert. Ferner verläuft eine zusätzliche Rille 9 orthogonal durch die Erhebungen 7 und die Vertiefungen 8.

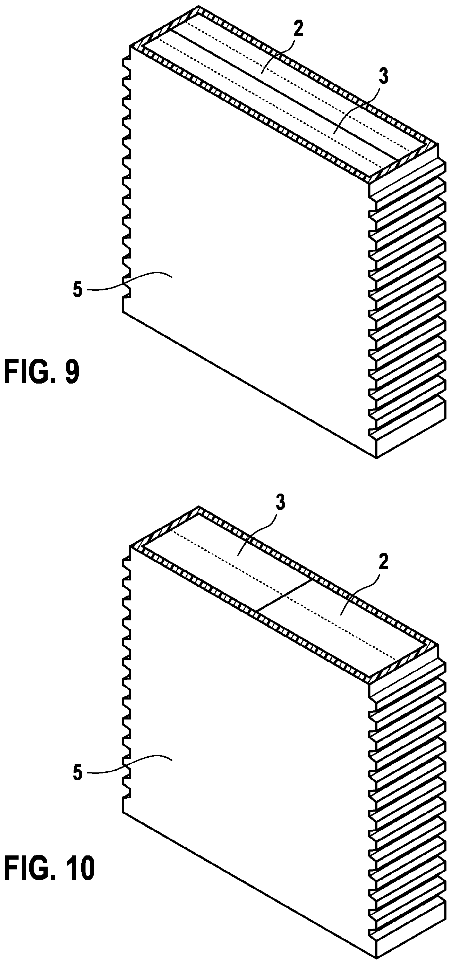

In den Figuren 9 bis 11 wird ein einzelner magnetischer Körper durch zwei magnetische Körper 2, 3 ersetzt. Mit anderen Worten erfolgt eine Segmentierung des großen magnetischen Körpers - gemäß den vorherigen Figuren - in zwei kleinere magnetische Körper 2, 3. Auf diese Weise ist ein Magnetpaket erzeugbar, das sich aus den zwei segmentierten magnetischen Körpern 2, 3 zusammensetzt.

Figur 9 zeigt eine Klemmvorrichtung 1 mit einem ersten magnetischen Körper 2 und einem zweiten magnetischen Körper 3, wobei beide magnetischen Körper 2, 3 als Permanentmagnete ausgebildet sind. Die magnetischen Körper 2, 3 sind quaderförmig ausgebildet und weisen dieselbe Form auf. Beide magnetischen Körper 2, 3 liegen an ihren sich gegenseitig anziehenden Oberflächen bzw. Polen plan aufeinander. Mit anderen Worten sind eine Grundfläche eines magnetischen Körpers und eine Deckfläche eines anderen magnetischen Körpers miteinander verbunden.

Figur 10 zeigt eine Klemmvorrichtung 1 mit einem ersten magnetischen Körper 2 und einem zweiten magnetischen Körper 3, wobei beide magnetischen Körper 2, 3 als Permanentmagnete ausgebildet sind. Die magnetischen Körper 2, 3 sind quaderförmig ausgebildet und weisen dieselbe Form auf. Beide magnetischen Körper 2, 3 liegen an ihren sich gegenseitig anziehenden Stirnseiten bzw. Polen plan nebeneinander. Mit anderen Worten sind eine Stirnseite eines magnetischen Körpers und eine Stirnseite eines anderen magnetischen Körpers miteinander verbunden.

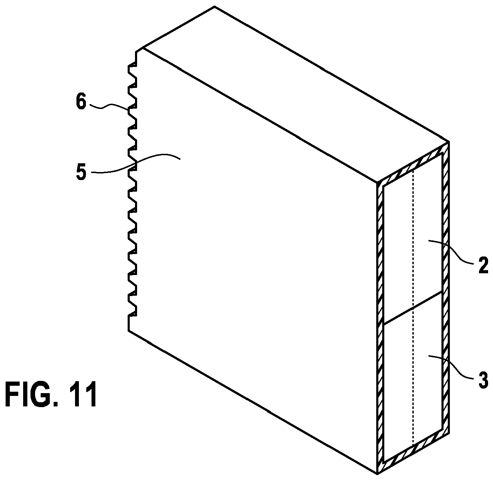

Figur 11 zeigt eine weitere Anordnung der magnetischen Körper 2, 3 innerhalb der Klemmvorrichtung 1 aus Figur 10.

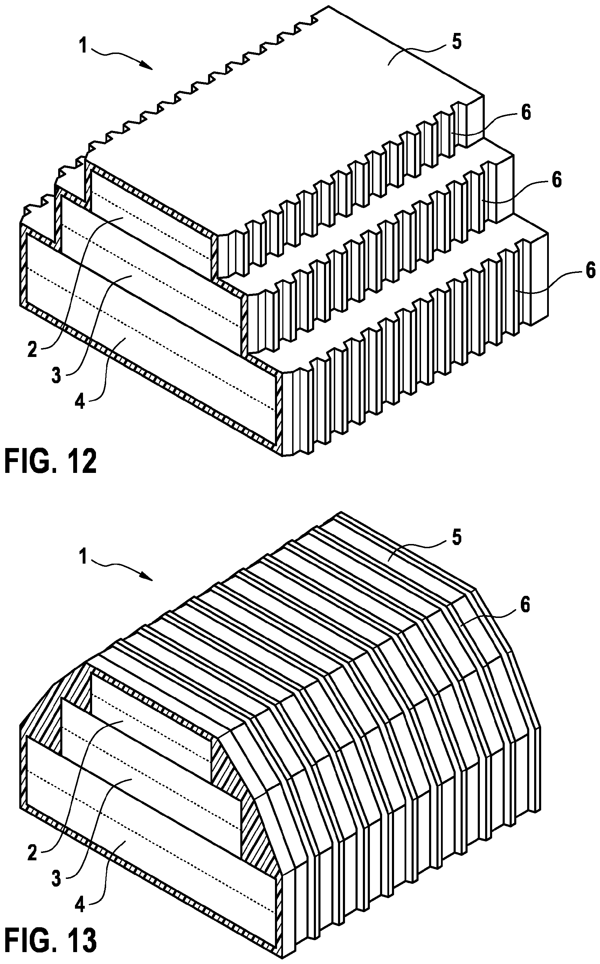

Figur 12 zeigt drei aufeinander gestapelte magnetische Körper 2, 3, 4. Die magnetischen Körper 2, 3, 4 liegen an ihren sich gegenseitig anziehenden Oberflächen bzw. Polen plan aufeinander und sind als Permanentmagnete ausgebildet. Mit anderen Worten sind eine Grundfläche eines magnetischen Körpers und eine Deckfläche eines anderen magnetischen Körpers miteinander verbunden. Die magnetischen Körper 2, 3, 4 sind quaderförmig mit unterschiedlicher Breite ausgebildet. Die magnetischen Körper 2, 3, 4 bilden eine Art Stufenstruktur mit Plateau in Form eines Magnetpakets aus. Die Umspritzung 5 verläuft mantelseitig über das Magnetpaket. Die Klemmmittel 6 sind stirnseitig angeordnet.

Figur 13 zeigt die drei aufeinander gestapelten magnetischen Körper 2, 3, 4 aus Figur 12. Im Unterschied zur Figur 12 sind die stufenbildenden Bereiche derart mit der Umspritzung aufgefüllt, dass sich die Klemmvorrichtung 1 keine Stufengeometrie mehr aufweist. Dabei weist der unterste magnetische Körper 4 einen rechteckigen Querschnitt auf. Die beiden auf dem untersten magnetischen Körper 4 angeordneten magnetische Körper 2, 3 bilden jeweils mit der Umspritzung 5 einen trapezförmigen Querschnitt aus.

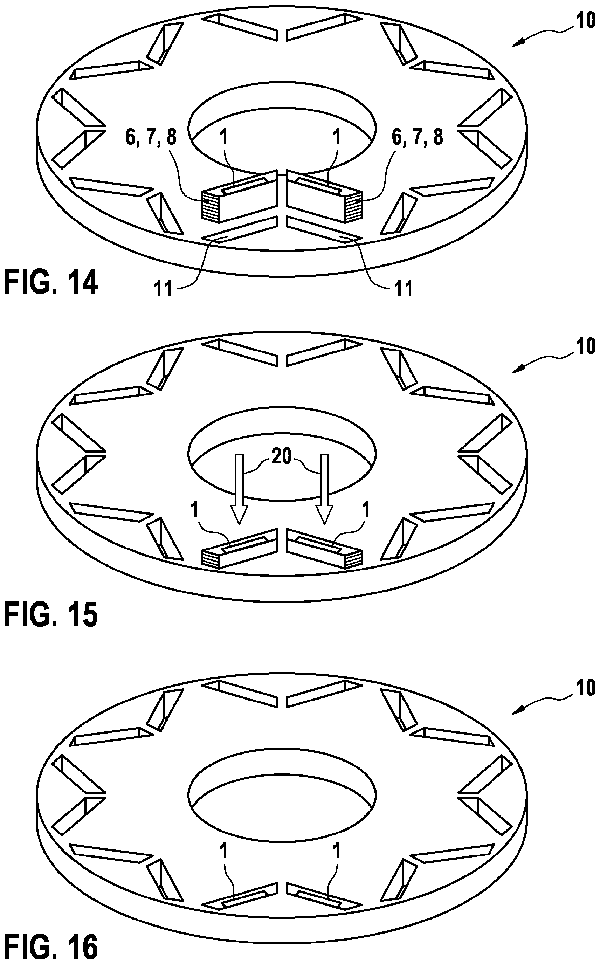

Figur 14 zeigt einen Rotor 10 einer elektrischen Maschine mit zwei Klemmvorrichtungen 1 vor dem Einsetzen in Öffnungen 11 des Rotors 10. Figur 15 zeigt die zumindest teilweise in die Öffnungen 11 eingesetzten Klemmvorrichtungen 1. Figur 16 zeigt die vollständig in die Öffnungen 11 eingesetzten Klemmvorrichtungen 1.

Der Rotor 10 weist eine Vielzahl von Öffnungen 11 zur Aufnahme jeweils einer Klemmvorrichtung 1 auf. Der Übersicht halber sind nur zwei Klemmvorrichtungen 1 gezeigt. Jede Klemmvorrichtung 1 ist als ein im Wesentlichen prismatischer Körper mit trapezförmiger Grundfläche ausgebildet. Klemmmittel 6 sind im Bereich von schrägen Flächen der Klemmvorrichtung 1 vorgesehen.

Für die Klemmvorrichtungen 1 gemäß den Figuren 1 bis 16 gilt, dass die Erhebungen 7 und Vertiefungen 8 des Klemmmittels 6 orthogonal zu einer Einbringrichtung 20, die sich beim Einbringen der Klemmvorrichtung 1 in die Öffnungen 11 des Rotors 10 ergibt, angeordnet sind. Die Umspritzung 5 ist aus einem elastischen Material gefertigt, insbesondere aus einem thermoplastischen Elastomer (TPE) oder einem anderen Elastomer (z.B. NBR, EPDM). Dabei weist die Umspritzung eine materialbedingte Nachgiebigkeit auf. Das elastische Material kann unter einer Krafteinwirkung seine Form verändern und bei Wegfall der einwirkenden Kraft wieder in die Ursprungsform zurückzukehren. Hierdurch lässt sich eine Klemmung der Klemmvorrichtung 1 in einer Öffnungen 11 des Rotors 10 bewerkstelligen.

Durch die Nachgiebigkeit der Umspritzung 5 kann sich auch der wenigstens eine magnetische Körper 2, 3, 4 in der Rotoröffnung 11 automatisch ausrichten.

Während die vorliegende Erfindung anhand der beigefügten Figuren ausführlich und detailliert beschrieben worden ist, bleibt der Schutzbereich der vorliegenden Erfindung allein durch die beigefügten Ansprüche beschränkt.

## Patentansprüche

1. Klemmvorrichtung (1) für eine elektrische Maschine aufweisend wenigstens einen magnetischen Körper (2, 3, 4) und eine den wenigstens einen magnetischen Körper (2, 3, 4) zumindest teilweise umgebende Umspritzung (5), wobei die Umspritzung (5) Klemmmittel (6) zur Klemmung in Öffnungen (11) eines Rotors (10) der elektrischen Maschine aufweist, **dadurch gekennzeichnet, dass** die Klemmvorrichtung wenigstens zwei an ihren sich gegenseitig anziehenden Polen aufeinanderliegende, miteinander verbundene magnetische Körper (2, 3, 4) umfasst und dass die aufeinanderliegenden magnetischen Körper (2, 3, 4) derart unterschiedlich groß und/oder unterschiedlich geformt sind, dass ein stufenförmiges Magnetpaket gebildet ist.

2. Klemmvorrichtung (1) nach Anspruch 1, wobei die Klemmmittel (6) an wenigstens zwei Seiten der Klemmvorrichtung (1) angeordnet sind.

3. Klemmvorrichtung (1) nach einem der vorhergehenden Ansprüche, wobei die Klemmmittel (6) als abwechselnd angeordnete Erhebungen (7) und Vertiefungen (8) in der Umspritzung (5) ausgebildet sind.

4. Klemmvorrichtung (1) nach Anspruch 3, wobei ein Abstand zwischen benachbarten Erhebungen (7) gleich groß ist.

5. Klemmvorrichtung (1) nach Anspruch 3, wobei ein Abstand zwischen benachbarten Erhebungen (7) abwechselnd unterschiedlich groß ist.

6. Klemmvorrichtung (1) nach einem der Ansprüche 3 bis 5, wobei wenigstens eine weitere Vertiefung (9) im Wesentlichen orthogonal durch die Erhebungen (7) und Vertiefungen (8) verläuft.

7. Klemmvorrichtung (1) nach Anspruch 1, wobei die zwei magnetischen Körper (2, 3, 4) einen stufenförmigen Querschnitt ausbilden.

8. Rotor (10) für eine elektrische Maschine aufweisend Öffnungen (11), in denen jeweils eine Klemmvorrichtung (1) gemäß einem der vorherstehenden Ansprüche angeordnet ist.

## Claims

1. Clamping device (1) for an electric machine, having at least one magnetic member (2, 3, 4) and an over-moulded encapsulation (5) which at least partially surrounds the at least one magnetic member (2, 3, 4), wherein the over-moulded encapsulation (5) has clamping means (6) for clamping in openings (11) of a rotor (10) of the electric machine, **characterized in that** the clamping device comprises at least two interconnected magnetic members (2, 3, 4) which bear on one another at their mutually attracting poles, and **in that** the mutually bearing magnetic elements (2, 3, 4) are dissimilarly sized and/or dissimilarly shaped in such a manner that a step-shaped magnetic pack is formed.

2. Clamping device (1) according to Claim 1, wherein the clamping means (6) are disposed on at least two sides of the clamping device (1).

3. Clamping device (1) according to one of the preceding claims, wherein the clamping means (6) are configured as alternating elevations (7) and depressions (8) disposed in the over-moulded encapsulation (5).

4. Clamping device (1) according to Claim 3, wherein the spacings between adjacent elevations (7) are of identical size.

5. Clamping device (1) according to Claim 3, wherein the spacings between adjacent elevations (7) alternate in size.

6. Clamping device (1) according to one of Claims 3 to 5, wherein at least one further depression (9) runs in a substantially orthogonal manner through the elevations (7) and the depressions (8).

7. Clamping device (1) according to Claim 1, wherein the two magnetic members (2, 3, 4) configure a step-shaped cross section.

8. Rotor (10) for an electric machine, having openings (11) in which one clamping device (1) according to one of the preceding claims is in each case disposed.

## Revendications

1. Dispositif de serrage (1) destiné à une machine électrique comportant au moins un corps magnétique (2, 3, 4) et un surmoulage (5) entourant au moins partiellement ledit au moins un corps magnétique (2, 3, 4), dans lequel le surmoulage (5) comporte des moyens de serrage (6) destinés à assurer un serrage dans des ouvertures (11) d'un rotor (10) de la machine électrique,
**caractérisé en ce que** le dispositif de serrage comprend au moins deux corps magnétiques (2, 3, 4) reliés l'un à l'autre, superposés l'un à l'autre à l'emplacement de leurs pôles s'attirant mutuellement et **en ce que** les corps magnétiques (2, 3, 4) superposés l'un à l'autre présentent des tailles différentes et/ou des formes différentes telles qu'il se forme un paquet magnétique étagé.

2. Dispositif de serrage (1) selon la revendication 1, dans lequel les moyens de serrage (6) sont disposés sur au moins deux côtés du dispositif de serrage (1).

3. Dispositif de serrage (1) selon l'une des revendications précédentes, dans lequel les moyens de serrage (6) sont réalisés sous la forme de bossages (7) et de creux (8) disposés en alternance dans le surmoulage (5).

4. Dispositif de serrage (1) selon la revendication 3, dans lequel les distances entre des bossages (7) adjacents ont des valeurs identiques.

5. Dispositif de serrage (1) selon la revendication 3, dans lequel les distances entre des bossages (7) adjacents ont alternativement des valeurs différentes.

6. Dispositif de serrage (1) selon l'une des revendications 3 à 5, dans lequel au moins un autre creux (9) s'étend sensiblement perpendiculairement à travers les bossages (7) et les creux (8).

7. Dispositif de serrage (1) selon la revendication 1, dans lequel les deux corps magnétiques (2, 3, 4) forment une section transversale étagée.

8. Rotor (10) destiné à une machine électrique comportant des ouvertures (11) dans lesquelles est respectivement disposé un dispositif de serrage (1) selon l'une des revendications précédentes.
